# EUROPÄISCHE PATENTANMELDUNG

(11) **EP 1 332 925 A1**
(43) Veröffentlichungstag der Anmeldung: **06.08.2003**
(21) Anmeldenummer: 02002230.7
(22) Anmeldetag: 30.01.2002
(51) Int. Cl.: B60R 16/02, B60R 25/10

(54) **Verfahren und Vorrichtung zur Aktivierung benutzerspezifischer Fahrzeugeigenschaften**

(71) Anmelder: Ford Global Technologies, Inc., A subsidiary of Ford Motor Company, Dearborn, Michigan 48126 (US)
(72) Erfinder: Schmitz, Stephan, 50672 Köln (DE)
(74) Vertreter: Drömer, Hans-Carsten, Dipl.-Ing.

(57) **Zusammenfassung**

Die Erfindung offenbart ein Verfahren und eine Vorrichtung zur Aktivierung benutzerspezifischer Fahrzeugeigenschaften, wobei eine Sendeeinheit einen Detektor 4 zur Erfassung körpereigener Merkmale, bevorzugt Fingerabdrücke des Benutzers, aufweist und ein den Benutzer charakterisierendes Signal erzeugt, und wobei eine Empfangseinheit im Fahrzeug, die dieses charakteristische Signal empfängt, mit Mitteln indirekt oder direkt verbunden ist, welche die benutzerspezifischen Fahrzeugeigenschaften einstellen. Bevorzugt ist die Sendeeinheit in einem Fahrzeugschlüssel 1 untergebracht; der Detektor 4 ist zur Erfassung eines Fingerabdrucks des Benutzers ausgeführt.

Durch die Verwendung der Erfindung lediglich zur Einstellung der benutzerspezifischen Fahrzeugeigenschaften, nicht aber als Sicherungssystem, kann die Benutzererkennung auf wenige Benutzer beschränkt sein. Damit können der Detektor 4 bzw. die Sendeeinheit sehr einfach ausgeführt sein; die Benutzererkennung erfolgt vereinfacht für körpereigene Merkmale, gerade so dass die Merkmale der wenigen Benutzer unterschieden werden können. Umständliche Erkennungsverfahren, wie sie für die bekannten Sicherungssysteme erforderlich sind, werden hier nicht benötigt.

## Beschreibung

Die Erfindung bezieht sich auf ein Verfahren und eine Vorrichtung zur Aktivierung benutzerspezifischer Fahrzeugeigenschaften.

Unter benutzerspezifischen Fahrzeugeigenschaften sind Einstellungen zu verstehen, die der Benutzer am Fahrzeug für seinen persönlichen Gebrauch vornimmt und die für verschiedene Benutzer unterschiedlich sind. Benutzerabhängig eingestellt werden können u. a. Sitze, Spiegel, Lenkräder, Klimaanlagen, Airbags, Radios und andere Unterhaltungseinrichtungen, Mobiltelefone, Navigationssysteme, fahrzeugeigene Kommunikationseinrichtungen, Bedienungsoberflächen, aber auch die auf den Benutzer angepaßte Motorsteuerung, Getriebesteuerung und Fahrwerkregelung.

Aus der EP 0 924 123 ist eine Vorrichtung zur Aktivierung benutzerspezifische Fahrzeugeigenschaften bekannt, bei der Fingerabdrucksensoren zur Benutzererkennung in oder am Fahrzeug angeordnet sind. Wird aufgrund eines Fingerabdruckes ein Benutzer erkannt, stellen sich die benutzerspezifischen Fahrzeugeigenschaften automatisch wie vom Benutzer gewünscht ein, ohne daß er Einstellungen im Einzelnen vornehmen muß.

Vor allem bei im Innenraum angeordneten Fingerabdrucksensor kann es jedoch zu Unbequemlichkeiten für den Benutzer dahingehend kommen, daß z. B. die Sitz- und Lenkradeinstellung beim Einsteigen noch nicht an den Benutzer angepaßt werden konnte, da der Fingerabdrucksensor nicht berührt werden kann, ohne daß der Benutzer ins Fahrzeug eingestiegen ist. Bei der Anordnung des Fingerabrucksensors außen am Fahrzeug können Fahrzeugeinstellungen schon vor dem Einsteigen des Benutzers ausgeführt werden, allerdings kann der Einstellvorgang trotzdem eine Weile dauern, so daß für den Benutzer eine kurze Wartezeit entsteht, bis er bequem einsteigen kann. Diese Wartezeit kann auch durch die Inbetriebnahme des Steuergerätes bedingt sein, wenn dieses aus dem Stand-By/Sleep Modus "geweckt". wird. Weiterhin besteht die Gefahr der Verschmutzung des Fingerabdrucksensors, so daß eine sichere Benutzererkennung nicht immer gewährleistet ist.

In der EP 0 913 458 ist ein Verfahren zum Betreiben eines Sicherungssystems offenbart, welches mittels einer Sendeeinheit bedient wird, die einen Detektor zur Erfassung körpereigener Merkmale des Benutzers, vorzugsweise einen Fingerabdruck, aufweist, wobei die Sendeeinheit u. a. auch in einem Fahrzeugschlüssel untergebracht sein kann. Die Sendeeinheit sendet ein den Benutzer charakterisierendes Identifikationssignal an eine Sicherungseinrichtung, die bei Erkennung eines zur Entsicherung befugten Benutzers die Sicherungseinrichtung entsichert.

Die Funktion eines Sicherungssystems stellt, vor allem an den Fingerabdruckdetektor, sehr hohe Anforderung an die Genauigkeit und Reproduzierbarkeit der körpereigenen Merkmale, wofür sehr aufwendige Detektoren bzw. Sendeeinrichtungen zur Erfassung und Verarbeitung großer Datenmengen erforderlich sind.

Aus der DE 195 11 386 ist eine Diebstahlschutzvorrichtung mit einem tragbaren Sender, der einen Codeerzeuger aufweist, bekannt, wobei ein akustisches Passwort des Benutzers in ein Codesignal umgewandelt und vom Sender zu einem im Fahrzeug befindlichen Empfänger gesendet wird, wo dann das Codesignal ausgewertet wird und bei Berechtigung die Türen ent- oder verriegelt werden. Auch hier gilt, wie bereits oben gesagt, daß aufgrund der Sicherheitsanforderungen an eine Diebstahlschutzvorrichtung ein erheblicher Aufwand für den Codeerzeuger erforderlich ist, damit eine sichere und störungsfreie Funktion jederzeit gewährleistet ist.

Aufgabe der Erfindung ist es, ein einfaches und zuverlässiges Verfahren zur Aktivierung benutzerspezifischer Fahrzeugeigenschaften zu schaffen, wobei die oben beschriebenen Nachteile vermieden werden können.

Gelöst wird diese Aufgabe, indem bei einem Verfahren zur Aktivierung benutzerspezifischer Fahrzeugeigenschaften eine tragbare Sendeeinheit einen Detektor aufweist, der körpereigene Merkmale des Benutzers erfaßt und die Sendeeinheit ein den Benutzer charakterisierendes Signal erzeugt, und wobei beim Empfang dieses charakteristischen Signals von einer Empfangseinheit im Fahrzeug sich selbsttätig vom Benutzer definierte Fahrzeugeigenschaften einstellen.

Des weiteren offenbart die Erfindung eine Vorrichtung zur Aktivierung benutzerspezifischer Fahrzeugeigenschaften, wobei eine Sendeeinheit einen Detektor zur Erfassung körpereigener Merkmale des Benutzers aufweist und ein den Benutzer charakterisierendes Signal erzeugt, und wobei eine Empfangseinheit im Fahrzeug, die dieses charakteristische Signal empfängt, mit Mitteln indirekt oder direkt verbunden ist, welche die benutzerspezifischen Fahrzeugeigenschaften einstellen.

Durch die Verwendung der Erfindung lediglich zur Einstellung der benutzerspezifischen Fahrzeugeigenschaften, nicht aber als Sicherungssystem, kann die Benutzererkennung auf wenige Benutzer beschränkt sein. Damit können der Detektor bzw. die Sendeeinheit sehr einfach ausgeführt sein; die Benutzererkennung erfolgt vereinfacht für körpereigene Merkmale, gerade so dass die Merkmale der wenigen Benutzer unterschieden werden können. Umständliche Erkennungsverfahren, wie sie für die bekannten Sicherungssysteme erforderlich sind, werden hier nicht benötigt.

Durch die Verwendung einer tragbaren Sendeeinheit kann der Benutzer schon aus einiger Entfernung vom Fahrzeug seine benutzerspezifischen Fahrzeugeigenschaften einstellen lassen, so dass er schon beim Einstieg ohne Wartezeit alle Einstellungen wie von ihm gewünscht vorfindet. Weiterhin ist die Gefahr der Verschmutzung und damit der Fehlfunktion des Detektors sehr gering, da die Sendeeinheit, vom Benutzer getragen, geschützt aufbewahrt wird.

Die Erfindung ist sehr gut geeignet, z. B. als zusätzliche Ausstattungsoption eines Fahrzeuges zum Einsatz zu kommen, auch in Verbindung mit einem vorhandenen Sicherungssystem. Die begrenzte Anzahl von Benutzern stellt hier keinen Nachteil dar, da in der Regel sowieso nur wenige wechselnde Benutzer ein Fahrzeug teilen und der Fahrzeugzugang nicht durch die Erfindung gesteuert wird.

Körpereigene Merkmale des erfinderischen Verfahrens können zumindest ein Fingerabdruck des Benutzers sein, der Detektor ist dann ein Fingerabdruckdetektor. In einer weiteren Ausführung der Erfindung wird das Merkmal akustisch vom Benutzer übermittelt, indem vom Detektor z. B. die Stimme, Pfiffe, Klatschen oder andere charakteristische Geräusche, z.B. Codewörter, des Benutzers erfasst werden. Der Detektor kann dann ein Mikrophon sein.

In einer bevorzugten Ausführung der Erfindung ist die Sendeeinheit mit Detektor in einem Schlüssel untergebracht. Der Schlüssel stellt in der Regel die Sicherungseinrichtung dar, über den der Fahrzeugzugang geregelt wird. Dabei kann der Schlüssel auch eine Fernbedienung zur Fahrzeugentriegelung aufweisen. Der Detektor erfasst, welcher Benutzer gerade den Schlüssel besitzt, so dass die benutzerspezifischen Fahrzeugeigenschaften entsprechend eingestellt werden können.

In einer vorteilhaften Ausgestaltung der Erfindung erfolgt die Benutzererkennung durch Auswertung der vom Detektor erfaßten körpereigene Merkmale des Benutzers in der Sendeeinheit, das charakteristische Signal ist dann ein Benutzercode. Der Detektor weist eine angeschlossene Auswerteeinheit auf, die die vom Detektor erfassten körpereigenen Merkmale analysiert. Da nur wenige Benutzer unterschieden werden müssen, ist die Auswertung mit einfachen Auswerte-Algorithmen und entsprechend vereinfachten Auswerteeinheiten bei minimalem Strombedarf durchführbar. Dadurch ist die gesamte Sendeeinheit schaltungstechnisch sehr einfach und sehr klein ausgeführt sein und kann somit problemlos in einer Betätigungsvorrichtung für ein Sicherungssystem wie z. B. in einem bestehenden Fahrzeugschlüssel untergebracht werden.

In einer anderen vorteilhaften Ausgestaltung der Erfindung enthält das charakteristische Signal die vom Detektor erfaßten körpereigenen Merkmale des Benutzers zumindest teilweise, die Benutzererkennung erfolgt durch Auswertung dieser Merkmale in der Empfangseinheit. Die vom Detektor ermittelten körpereigenen Merkmale sind, da nur wenige Benutzer zu unterscheiden sind, auf wenige Signale reduziert. Diese wenigen Signale werden als charakteristisches Signal an die Empfangseinheit im Fahrzeug gesendet, an die eine Auswerteeinheit angeschlossen ist. Da nur wenige Signale von der Sendeeinheit gesendet werden, kann die Sendeeinheit auch in diesem Fall sehr einfach aufgebaut sein und kann entsprechend einfach in beliebige Betätigungsvorrichtungen integriert werden.

In einer bevorzugten Ausführung der Erfindung wird das charakteristische Signal mittels eines auf der Sendeeinheit angeordneten Schalters ausgelöst. Ähnlich wie bei Ver- und Entriegelungstasten von Fahrzeugfernbedienungen wird das charakteristische Signal erst nach Schalterbetätigung gesendet, so dass auch die benutzerspezifische Fahrzeugeinstellung erst nach der Schalterbetätigung erfolgt.

Vorteilhafterweise bilden Schalter und Detektor eine bauliche Einheit, indem z. B. der Detektor selbst in Form eines Druckkontaktes ausgeführt ist. Damit lässt sich die Schalter/Detektoreinheit platzsparend unterbringen.

In einer weiteren vorteilhaften Ausführung der Erfindung ist der Detektor durch auf der Sendeeinheit angeordnete Erhebungen flankiert. Auf diese Weise kann ein Finger des Benutzers nur in bestimmten Positionen auf dem Detektor aufgelegt werden, was die Abtastung und dir Erkennbarkeit des Fingerabdruckes verbessert.

Vorteilhafte weist die Sendeeinheit akustische und/oder optische Signalvorrichtungen auf, die das Senden des charakteristischen Signals anzeigen. Damit wird der Benutzer darüber informiert, dass er von der Sendeeinheit als Benutzer erkannt wurde bzw. dass zumindest die körpereigenen Merkmale vom Detektor erfasst wurden.

Weitere vorteilhafte Ausgestaltungen der Erfindung sind den Figuren zu entnehmen.

Es zeigen:
- Figur 1:: eine Draufsicht auf einen Schlüssel mit Detektor; und
- Figur 2:: einen Querschnitt durch den Schlüssel entlang der Linie A-A.

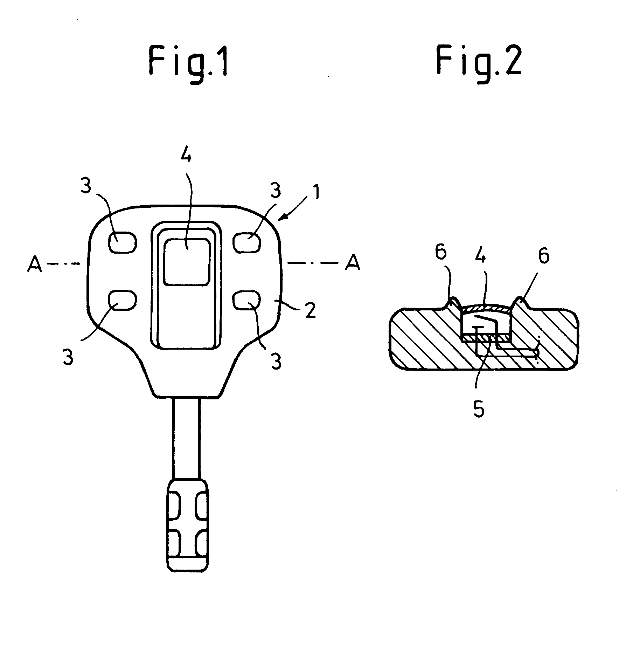

Der Schlüssel 1 in Figur 1 weist in seinem Griff 2 mehrere Druckschalter 3 auf, die der Betätigung bekannter Funktionen einer Sicherungseinrichtung wie Türent- und Türverriegelung dienen. Zusätzlich ist im Griff ein Fingerabdruckdetektor 4 zur Erfassung eines Fingerabdruckes des Benutzers angeordnet.

In Figur 2 ist der Querschnitt durch den Schlüssel 1 entlang der Linen A-A dargestellt. Der Fingerabruckdetektor 4 ist gleichzeitig als Druckschalter 5 ausgeführt, d. h. bei Ausübung eines Druckes auf den Fingerabruckdetektor 4 wird der Druckschalter betätigt. Der Fingerabdruckdetektor 4 ist seitlich von den beiden Erhebungen 6 flankiert, wodurch eine bequeme Bedienung des Druckschalters 5 nur dann gegeben ist, wenn der Finger des Benutzers auf dem Fingerabdruckdetektor 4 eine bestimmte Position einnimmt. Damit sinkt der Rechenaufwand zur Erkennung des Fingerabdruckes.

## Patentansprüche

1. Verfahren zur Aktivierung benutzerspezifischer Fahrzeugeigenschaften, wobei eine tragbare Sendeeinheit einen Detektor (4) aufweist, der körpereigene Merkmale des Benutzers erfasst, und die Sendeeinheit ein den Benutzer charakterisierendes Signal erzeugt, und wobei beim Empfang dieses charakteristischen Signals von einer Empfangseinheit im Fahrzeug sich selbsttätig vom Benutzer definierte Fahrzeugeigenschaften einstellen.

2. Verfahren nach Anspruch 1,
**dadurch gekennzeichnet, daß**
die körpereigenen Merkmale zumindest ein Fingerabdruck des Benutzers sind.

3. Verfahren nach Anspruch 1,
**dadurch gekennzeichnet, daß**
die körpereigenen Merkmale akustisch vom Benutzer übermittelt werden.

4. Verfahren nach Anspruch 1, 2 oder 3,
**dadurch gekennzeichnet, daß**
die Sendeeinheit mit Detektor (4) in einem Schlüssel (1) untergebracht ist.

5. Verfahren nach einem der Ansprüche 1 bis 4,
**dadurch gekennzeichnet, daß**
die Benutzererkennung durch Auswertung der vom Detektor (4) erfaßten körpereigene Merkmale des Benutzers in der Sendeeinheit erfolgt und daß das charakteristische Signal ein Benutzercode ist.

6. Verfahren nach einem der Ansprüche 1 bis 4,
**dadurch gekennzeichnet, daß**
das charakteristische Signal die vom Detektor (4) erfaßten körpereigenen Merkmale des Benutzers zumindest teilweise enthält und daß die Benutzererkennung durch Auswertung dieser Merkmale in der Empfangseinheit erfolgt.

7. Verfahren nach einem der vorhergehenden Ansprüche,
**dadurch gekennzeichnet, daß**
das charakteristische Signal mittels eines auf der Sendeeinheit angeordneten Schalters (5) ausgelöst wird.

8. Vorrichtung zur Aktivierung benutzerspezifischer Fahrzeugeigenschaften, wobei eine Sendeeinheit einen Detektor (4) zur Erfassung körpereigener Merkmale des Benutzers aufweist und ein den Benutzer charakterisierendes Signal erzeugt, und wobei eine Empfangseinheit im Fahrzeug, die dieses charakteristische Signal empfängt, mit Mitteln indirekt oder direkt verbunden ist, welche die benutzerspezifischen Fahrzeugeigenschaften einstellen.

9. Vorrichtung nach Anspruch 8,
**dadurch gekennzeichnet, daß**
die Sendeeinheit mit Detektor (4) in einem Schlüssel (1) untergebracht ist.

10. Vorrichtung nach Anspruch 8 oder 9,
**dadurch gekennzeichnet, daß**
die Sendeeinheit einen Schalter (5) aufweist, durch den das charakteristische Signal ausgelöst wird.

11. Vorrichtung nach Anspruch 10,
**dadurch gekennzeichnet, daß**
Detektor (4) und Schalter (5) eine bauliche Einheit bilden.

12. Vorrichtung nach Anspruch 8, 9, 10 oder 11,
**dadurch gekennzeichnet, daß**
der Detektor (4) durch auf der Sendeeinheit angeordnete Erhebungen (6) flankiert ist.

13. Vorrichtung nach Anspruch 8,
**dadurch gekennzeichnet, daß**
die Sendeeinheit akustische und/oder optische Signalvorrichtungen aufweist, die das Senden des charakteristischen Signals anzeigen.
